Europäisches Patentamt

European Patent Office

Office européen des brevets

(19)

(11) Numéro de publication: **0 259 250**
**A1**

(12) # DEMANDE DE BREVET EUROPEEN

(21) Numéro de dépôt: **87810414.0**

(22) Date de dépôt: **22.07.87**

(51) Int. Cl.⁴: **B 64 D 1/22**

(30) Priorité: **28.07.86 CH 3019/86**

(43) Date de publication de la demande:
**09.03.88 Bulletin 88/10**

(84) Etats contractants désignés: **AT CH FR IT LI**

(71) Demandeur: **Fasel, Jean-Pierre**
**Laiterie**
**CH-1711 Arconciel (CH)**

(72) Inventeur: **Fasel, Jean-Pierre**
**Laiterie**
**CH-1711 Arconciel (CH)**

(74) Mandataire: **Steiner, Martin et al**
**c/o AMMANN INGENIEURS-CONSEILS EN PROPRIETE**
**INTELLECTUELLE SA BERNE Schwarztorstrasse 31**
**CH-3001 Bern (CH)**

(54) **Dispositif pour empêcher un container transporté suspendu à un hélicoptère de s'approcher de celui-ci.**

(57) Le container qui peut être une benne (1) est muni de chaque côté par rapport à la direction de déplacement de l'hélicoptère d'un stabilisateur avec poussée vers le bas (4) et, à l'arrière, d'un stabilisateur de direction (5) situé dans un plan parallèle au plan vertical longitudinal médian de l'hélicoptère. Les stabilisateurs avec poussée vers le bas (4) maintiennent la benne (1) d'autant plus éloignée de l'hélicoptère que la vitesse de vol est plus élevée, ce qui élimine le risque d'une collision entre benne transportée et rotor de queue (3) de l'hélicoptère.

FIG.1

EP 0 259 250 A1

Bundesdruckerei Berlin

## Description

Dispositif pour empêcher un container transporté suspendu à un hélicoptère de s'approcher de celui-ci

La présente invention concerne un dispositif pour empêcher un container transporté suspendu à un hélicoptère en vol de s'approcher de celui-ci, ledit container étant une benne ou similaire. On sait qu'il existe actuellement des hélicoptères susceptibles d'atteindre une vitesse de déplacement en vol horizontal pouvant aller jusqu'à 300 km/h. Lorsqu'une telle machine est affectée au transport de charges contenues dans un container ou une benne suspendu par un câble attaché à la partie inférieure de l'hélicoptère, on a observé à partir d'une vitesse de 120 km/h déjà, ou dans le cas d'un grand taux de descente, qu'un container de conception habituelle du commerce a tendance à se rapprocher de plus en plus de l'hélicoptère avec l'augmentation de la vitesse de vol et il existe alors le danger qu'il vienne en contact avec le rotor de queue de l'hélicoptère, lorsque celui-ci se déplace à grande vitesse. En outre, les bennes habituelles du commerce qui sont transportées à vide ont tendance à osciller et à ralentir la marche de la machine, ce qui diminue le rendement de l'hélicoptère utilisé comme transporteur aérien.

En conséquence, le but de la présente invention est de réaliser un dispositif permettant de maintenir en position écartée un container ou une benne suspendu à un hélicoptère se déplaçant à grande vitesse, le dispositif ne devant en aucun cas entraver ou ralentir la marche de l'hélicopère.

Pour atteindre ce but, le dispositif est réalisé comme décrit dans les revendications. Les stabilisateurs avec poussée vers le bas ont une efficacité d'autant plus grande que la vitesse de déplacement est plus élevée et ils maintiennent le container d'autant plus éloigné du rotor de queue que la vitesse est plus grande, empêchant tout risque de collision avec celui-ci. En outre, le container ou la benne est transporté à vide avec le fond ouvert, ce qui diminue ses oscillations ainsi que la trainée aérodynamique, de sorte que la marche de la machine n'est pas entravée et ceci améliore son rendement lorsqu'elle est utilisée comme transporteur aérien. On voit que les deux mesures ci-dessus, à savoir l'apport de stabilisateurs avec poussée vers le bas et ouverture du fond du container vide lors du transport, permettent d'une part d'éviter tout risque de collision entre container transporté et rotor de queue de l'hélicoptère et d'autre part d'éviter le ralentissement de l'hélicoptère, permettant à celui-ci d'utiliser sa grande vitesse de déplacement.

L'invention va être décrite plus en détail ci-après à l'aide d'exemples d'exécution illustrés dans le dessin.

La figure 1 montre la position d'un container avec et sans dispositif selon l'invention suspendu à un hélicoptère rapide,

La figure 2 montre une benne avec fond ouvert, comportant une première forme d'exécution du dispositif selon l'invention,

La figure 3 montre la benne de la figure 2 avec le fond fermé,

La figure 4 montre la disposition des stabilisateurs de la première forme d'exécution selon fig.2,

La figure 5 montre une benne avec une seconde forme d'exécution du dispositif selon l'invention, et

La figure 6 montre la disposition des stabilisateurs de la seconde forme d'exécution selon fig.5.

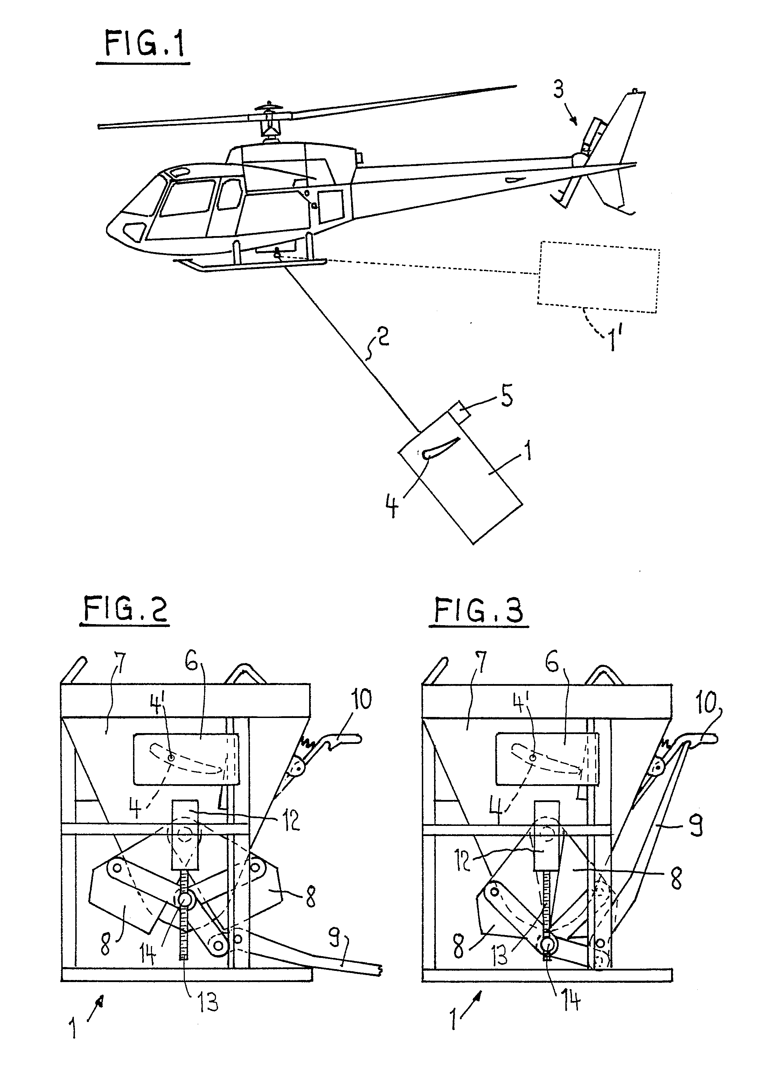

La figure 1 montre un hélicoptère transportant une charge telle que béton, gravier, sable, etc. contenue dans un container ou une benne 1 suspendu par un câble 2 à la partie inférieure de l'hélicoptère. La partie de la figure dessinée en pointillé représente une benne 1' ne comportant pas le dispositif selon l'invention et se trouvant en conséquence dans une position proche de l'horizontale, relativement rapprochée du rotor de queue 3 de l'hélicoptère en raison de la grande vitesse de déplacement de ce dernier. Il est visible que la position du container 1' est dangereuse en raison du risque de collision avec le rotor de queue. La benne dessinée en trait plein en figure 1 comporte des stabilisateurs avec poussée vers le bas 4 et de direction 5. Les stabilisateurs 4 maintiennent la benne 1 dans une position basse, d'autant plus éloignée du rotor de queue que la vitesse de déplacement de l'hélicoptère est plus grande. Cette solution est particulièrement intéressante par le fait que les stabilisateurs avec poussée vers le bas 4 n'agissent pas à faible vitesse, de sorte qu'en vol de montée, l'hélicoptère n'est pas inutilement chargé, ce qui contribue à augmenter son rendement comme transporteur aérien.

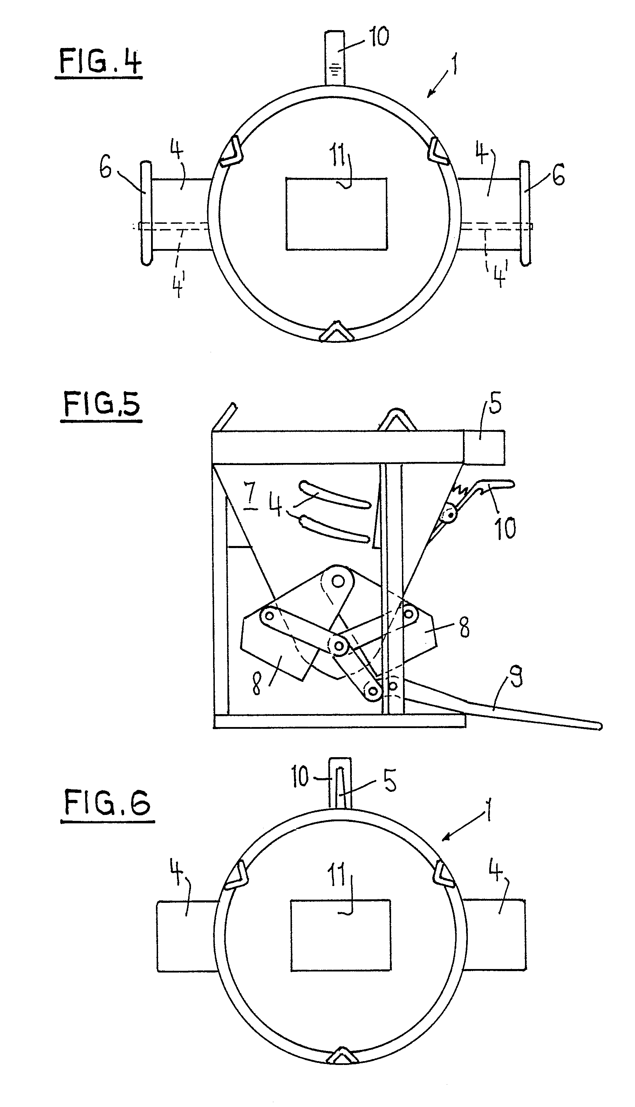

Les figures 2 et 3 montrent à titre d'exemple une benne à godets comportant de chaque côté par rapport à la direction de vol un stabilisateur avec poussée vers le bas 4 à l'extrémité duquel, voir figure 4, est fixé un stabilisateur de direction 6. Les stabilisateurs peuvent être montés au corps 7 en forme de cône de la benne par moulage, soudage, vissage, collage, rivetage, bridage ou tout autre moyen adéquat de fixation. La benne comporte à la partie inférieure du corps 7 des godets 8 susceptible de fermer et d'ouvrir le fond de la benne. En figure 2 le fond de la benne est ouvert et il est fermé en figure 3. Le basculement des godets 8 pour ouvrir et fermer le fond de la benne est effectué par un levier de commande manuelle 9 agissant par un système de leviers en soi connu sur les godets 8. La figure 3 montre que la benne est fermée lorsque le levier 9 est rabattu vers le haut, le long du corps de la benne et maintenu dans cette position par un crochet 10. Pour ouvrir la benne, il suffit de lever le crochet 10 pour libérer le levier 9 qui bascule alors par gravité dans la position illustrée en figure 2, ce mouvement de basculement du levier 9 ouvrant la benne. C'est dans cette position ouverte que la benne vide est transportée, ce qui permet de grandes vitesses de déplacement de l'hélicoptère sans oscillations excessives de la benne de faible poids et sans risque que la benne vide vienne en contact avec le rotor de queue de l'hélicoptère. La figure 4 montre la disposition des stabilisateurs avec poussée vers le bas 4 à l'extrémité desquels sont fixés les stabilisateurs de direction 6. Il est clair que le plan des stabilisateurs 6 est parallèle au plan vertical médian longitudinal de l'hélicoptère. La figure 4 montre encore la fenêtre 11 d'ouverture dans le fond de la benne 1.

Les figures 1, 2 et 3 montrent une première variante de l'invention selon laquelle les stabilisateurs 4 sont montés à la benne par l'intermédiaire d'un axe 4' autour duquel ils peuvent tourner librement. Ceci permet aux stabilisateurs de s'orienter automatiquement en fonction de la vitesse de l'hélicoptère, resp. de l'inclinaison de la benne par rapport à la verticale, de manière que l'effet de poussée vers le bas soit optimum dans chaque cas, c'est-à-dire pour n'importe quelle vitesse de l'hélicoptère.

La figure 2 montre que les godets 8 de la benne peuvent être actionnés par exemple par un moteur électrique 12 commandant une tige filetée 13 dont la rotation oblige un écrou 14 lié au mécanisme de basculement des godets à se déplacer le long de cette tige, dans un sens ou dans l'autre, de sorte que le fond de la benne peut être ouvert ou fermé électriquement. Comme variante, le moteur électrique avec la tige filetée et l'écrou peut être remplacé par un vérin hydraulique commandant le basculement des godets. La commande électrique ou hydraulique peut être combinée avec la commande manuelle par le levier 9 comme décrit plus haut.

La figure 5 montre une autre forme d'exécution du dispositif selon l'invention. Dans ce cas, il est possible d'équiper la benne de plusieurs stabilisateurs avec poussée vers le bas 4, montés de chaque côté du corps 7 de la benne. Dans l'exemple illustré, la benne comporte deux stabilisateurs 4 de chaque côté. Ces stabilisateurs ont exactement la même fonction que les stabilisateurs 4 de la figure 2. La benne selon figure 5 comporte en outre un stabilisateur de direction monté vers le sommet du corps 7 dans le plan vertical médian entre les stabilisateurs 4. La figure 6 montre la disposition des stabilisateurs 4 et 5 de la figure 5. Les figures 2, 3 et 5 montrent que les stabilisateurs avec poussée vers le bas sont en forme d'ailerons dont la forme exacte et la position exacte de fixation au corps de la benne sont déterminées par essais en soufflerie.

Mentionnons encore comme alternative que les stabilisateurs avec poussée vers le bas et de direction ne doivent pas obligatoirement être montés sur le container ou la benne, mais qu'ils peuvent aussi être montés par exemple sur un cadre ou un support prévu à cet effet à l'extrémité inférieure du câble de suspension du container à l'hélicoptère. Selon les figures 4 et 6, le container est accroché au câble porteur par trois crochets, de sorte qu'il se divise en trois brins. C'est à cet endroit qu'un cadre ou un support pour les stabilisateurs peut être prévu.

En résumé, l'apport à une benne ou à un container de stabilisateurs avec poussée vers le bas et de stabilisateurs de direction permet une forte augmentation de la vitesse de déplacement de l'hélicoptère, sans risque de collision entre benne et rotor de queue. L'ouverture du fond de la benne vide transportée permet également de grandes vitesses de déplacement. Toutes ces mesures concourent à augmenter la sécurité et le rendement d'un hélicoptère rapide utilisé comme transporteur aérien.

## Revendications

1. Dispositif pour empêcher un container transporté suspendu à un hélicoptère en vol de s'approcher de celui-ci, ledit container étant une benne (1) ou similaire, caractérisé en ce que des stabilisateurs avec poussée vers le bas (4)) et de direction (5,6) sont montés sur le container (1) ou à proximité immédiate de celui-ci.

2. Dispositif selon la revendication 1, caractérisé en ce que le container (1) comporte de chaque côté au moins un stabilisateur avec poussée vers le bas (4), le container étant en outre muni d'au moins un stabilisateur de direction (5,6).

3. Dispositif selon la revendication 2, caractérisé en ce que le corps (7) du container (1) comporte de chaque côté par rapport à la direction de déplacement au moins un stabilisateur de poussée vers le bas (4), chacun desdits stabilisateurs comportant à son extrémité libre un stabilisateur de direction (6) situé dans un plan vertical parallèle au plan vertical longitudinal médian de l'hélicoptère.

4. Dispositif selon la revendication 2, caractérisé en ce que le corps (7) du container (1) comporte de chaque côté par rapport à la direction de déplacement au moins un stabilisateur de poussée vers le bas (4), le container étant en outre muni à l'arrière d'au moins un stabilisateur de direction (5) situé dans le plan vertical longitudinal médian de l'hélicoptère.

5. Dispositif selon l'une des revendications 1 à 4, caractérisé en ce que les stabilisateurs de poussée vers le bas (4) sont en forme d'ailerons dont la configuration exacte et la position sur le corps du container (1) sont déterminées par essais en soufflerie.

6. Dispositif selon l'une des revendications 1 à 5, caractérisé en ce que les stabilisateurs (4,5,6) sont integrals ou rapportés au corps (7) du container (1).

7. Dispositif selon l'une des revendications 1 à 6, caractérisé en ce que les stabilisateurs de poussée vers le bas (4) sont montés de manière à tourner librement sur un axe (4') de la benne (1).

8. Dispositif selon la revendication 1, caractérisé en ce que les stabilisateurs avec poussée vers le bas et de direction sont montés en dehors du container, à proximité de celui-ci, sur un cadre prévu à l'extrémité inférieure du câble de suspension du container à l'hélicoptère.

9. Dispositif selon l'une des revendications 1

**0 259 250**

à 8, caractérisé en ce que le container est une benne (1) comprenant un mécanisme d'ouverture et de fermeture du fond de la benne, le mécanisme étant actionné par un levier de commande manuelle (9).

10. Dispositif selon la revendication 9, caractérisé en ce que lorsque la benne est fermée, le levier de commande (9) se trouve en position rabattue vers le haut, le long du corps (7) de la benne (1) et qu'il est maintenu dans cette position par un crochet rabattable (10) qui, à l'état soulevé, libère le levier de commande (9) et lui permet de basculer vers le bas par gravité, ce qui provoque l'ouverture du fond de la benne (1).

11. Dispositif selon la revendication 9 ou 10, caractérisé en ce que la benne (1) est transportée par l'hélicoptère avec le fond ouvert.

12. Dispositif selon l'une des revendications 9 à 11, caractérisé par le fait qu'il comporte une commande électrique ou hydraulique (12, 13, 14) de l'ouverture de fond de la benne, cette commande étant combinée ou non avec ladite commande manuelle (9).

13. Utilisation du dispositif selon la revendication 1 pour le transport par hélicoptère à des vitesses supérieures à 100 km/h de divers matériaux et objets tels que béton, gravier, sable, etc.

0259250

## FIG.1

## FIG.2

## FIG.3

0259250

FIG.4

FIG.5

FIG.6

Office européen
des brevets

**RAPPORT DE RECHERCHE EUROPEENNE**

Numero de la demande

EP 87 81 0414

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-1 578 252 (SICLI MATERIEL INCENDIE)<br>* Page 2, lignes 18-23,31-34 *<br>--- | 1,2,4,5,6,13 | B 64 D 1/22 |
| A | US-A-3 262 656 (BOEHLER)<br>* Figure 4; colonne 7, lignes 6-40 *<br>--- | 3,8 | |
| A | FR-A-1 192 435 (GOETGHEBEUR)<br>* Page 1, colonne de gauche, ligne 29 - colonne de droite, ligne 35 *<br>--- | 9,10 | |
| A | US-A-3 414 312 (GARLINGHOUSE)<br>* Colonne 3, lignes 7-23 *<br>--- | 9,12 | |
| A | US-A-4 099 676 (STERNER)<br>* Résumé *<br>----- | 1 | |

DOMAINES TECHNIQUES
RECHERCHES (Int. Cl.4)

B 64 D
E 04 G

Le présent rapport a été établi pour toutes les revendications

| Lieu de la recherche | Date d'achèvement de la recherche | Examinateur |
|---|---|---|
| LA HAYE | 04-11-1987 | HAUGLUSTAINE H.P.M. |

EPO FORM 1503 03.82 (P0402)